# EUROPEAN PATENT APPLICATION

(11) **EP 1 326 353 A1**
(43) Date of publication of application: **09.07.2003**
(21) Application number: 02360009.1
(22) Date of filing: 08.01.2002
(51) Int. Cl.: H04B 10/155, G02F 1/01

(54) **Optical transmitter for generation of an optical data signal out of at least two input modulation signals and modulation means**

(71) Applicant: ALCATEL, 75008 Paris (FR)
(72) Inventor: Lach, Eugen, Dr., 71672 Marbach (DE)
(74) Representative: Brose, Gerhard

(57) **Abstract**

The invention is based on an optical transmitter (OT) for generation of an optical data signal (SO) out of at least two input modulation signals (MS1, MS2), comprising a laser source (LS) for generation of a laser signal (S20) to be modulated corresponding to said modulation signals (MS1, MS2), at least two optical modulators (EAM1, EAM2) for modulation of said laser signal (S20) according to said modulation signals (MS1, MS2), wherein said modulators (EAM1, EAM2) are optically connected in series to said laser source (LS) and the optical transmitter (OT) comprises a control mean to control said modulators (EAM1, EAM2) such, that the passing laser signal (S1) is modulated subsequently in cyclic order within defined nonoverlapping time windows, an optical modulation unit (OMU) and a method therefore.

## Description

The invention relates to an optical transmitter for generation of an optical data signal out of at least two input modulation signals comprising a laser source for generation of a laser signal to be modulated corresponding to said modulation signals and at least two optical modulators for modulation of said laser signal according to said modulation signals according to the preamble of claim 1, an optical modulation unit according to the preamble of claim 7, an electroabsorption modulator according to the preamble of claim 8 and a method according to the preamble of claim 10 therefore.

Transmission of data on optical fibers is very efficient and is widely used in telecommunication systems. The requirements for the transmission speed on optical fibers are increasing according with the rapidly increasing amount of data being transmitted. The data capacity of optical transmission systems is mainly limited by the limited repetition rate of the data pulses of an optical signal to be transmitted and the efficiency of utilisation of the optical fiber bandwidth.

The bandwidth of the spectrum of an optical signal is, besides to the bit rate, strongly related to the modulation form, i.e. the pulse format used. Commonly used pulse formats in optical systems are the so-called non-return-to-zero (NRZ) format and the return-to-zero (RZ) format. NRZ pulses, in an ideal case, show rectangular shape, with a duration similar to the bit duration of a corresponding NRZ (data) signal. Since such a signal does not return to zero for a successive transmission of bits showing the value "1", it is referred to as non return-to-zero signal. The pulse duration of an RZ signal in contrast is shorter than the bit duration of said RZ signal. A signal using NRZ pulses shows a less broad frequency spectrum compared to signals using RZ pulses. The shorter the RZ pulses of an optical data signal are, the more optical bandwidth is used. Thus, e.g. for a wavelength division multiplex (WDM) transmission system working with a certain bit rate per WDM channel, the wavelength spacing required for the NRZ format is less broad compared to the wavelength spacing required for an RZ format.

Optical time division multiplexers (OTDM) are able to process optical signals of very high bit rates, e.g. beyond 80 Gbit/s in future optical systems. In classical optical time division multiplexers (OTDM) a pulsed signal is emitted by a laser source or a continuous wave signal of a laser is modulated to generate a pulse train. This signal is split into several portions of the same intensity, showing the same original pulse pattern. Each of these portions is fed into a switching device, responsive to a data signal with a bit rate of a fraction of the OTDM output signal. The switched output signals of all switching devices are then recombined at an optical coupler with a certain time lag between each of them to form the OTDM optical output signal.

Due to coherent cross talk of subsequent pulses, when recombining the signal portions at the common output port of a optical time division multiplexer according to the prior art, the maximum speed of such devices is limited. For reliable optical time division multiplexing, the optical input data must have return-to-zero pulse format with a very narrow pulse width (e.g. below 30 % of the available time window) to avoid coherent cross talk. This leads to a large optical signal bandwidth, which reduces the spectral efficiency of the system. Neighbouring wavelength in wavelength division multiplex (WDM) systems based on such optical time division multiplexers thus have to be spaced accordingly with great frequency distance. However, to further increase the transmission capacity of WDM systems, frequency spacing of so-called dense wavelength division multiplex (DWDM) systems will be reduced from 100 GHz today to 50 GHz in future. Thus efficient use of bandwidth is required for future WDM systems.

The object of the invention is to create an optical time multiplexing transmitter, that uses a minimum of optical bandwidth.

This object is achieved by an optical transmitter according to the teaching of claim 1, an optical modulation unit according to the teaching of claim 7, an electroabsorption modulator according to the teaching of claim 8 and a method according to the teaching of claim 10.

It is an idea of the invention to modulate a laser signal subsequently by cascaded modulators to avoid the splitting of an optical pulse signal, and the recombining after the modulation in the different branches. The modulators modulate the passing laser signal in one optical branch subsequently in cyclic order within defined non-overlapping time windows. Each modulator is controlled by a modulation signal with a bit rate of a fraction of the optical output bit rate, the fraction value depending on the number of cascaded modulators.

It is a further idea of the invention to realise an electroabsorption modulator to be used in an inventive optical transmitter, that only blocks the input laser signal for short time periods significantly shorter than the bit period of the output signal and remaining optically transparent in between.

Further developments of the invention can be gathered from the dependent claims and the following description.

In the following the invention will be explained further making reference to the attached drawings in which:
- Fig.1: shows an optical transmitter with an optical time division multiplex scheme according to the prior art,
- Fig.2a: schematically shows an electroabsorption modulator,
- Fig.2b: illustrates the electro-optical characteristics of an electroabsorption modulator controlled by an electrical signal according to prior art systems,
- Fig.2c: illustrates the electro-optical characteristics of an electroabsorption modulator according to the invention,
- Fig.3: illustrates the electro-optical characteristics of an electroabsorption modulator controlled according to the invention and
- Fig.4: shows an optical transmitter with an optical time division multiplex scheme according to the invention.

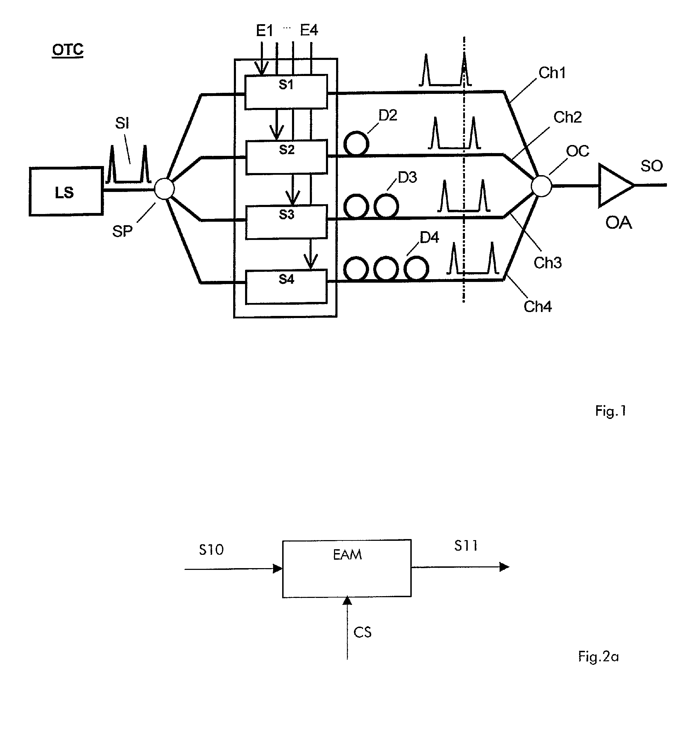

Fig.1 schematically shows a classical optical time division multiplex transmitter OTC according to the prior art. A laser source LS emitting a pulsed laser carrier SI is (optically) connected to an optical splitter SP. The optical splitter SP is further connected to four OTDM switches S1- S4. Each of these OTDM switches S1-S4 is controlled by a corresponding electrical input data signal E1-E4. The first OTDM switch S1 is directly connected to an optical coupler OC. The second to the fourth OTDM switch S2-S4 are each connected over a corresponding optical delay line D2, D3 or D4 to said optical coupler OC. The optical connection lines between the OTDM switches S1-S4 and the optical coupler OC form optical channels or branches CH1- CH4. The optical coupler OC is connected to an amplifier OA, that irradiates the output signal SO of the a classical optical time division multiplex transmitter OTC.

The laser source LS, e.g. realised as monolithic mode-locked laser, emits a pulsed laser carrier SI consisting of short RZ pulses. A typical pulse rate in this example is 10 Gbit/s. At the optical splitter SP, the laser carrier SI is split, by way of example, into four signal components of the same intensity, each one still representing the original laser carrier SI. Each signal component is fed to one of the OTDM switches S1- S4, that can be of any known kind. The switches S1- S4 are controlled by the electrical input data signal E1-E4, each showing a bit rate of 10 Gbit/s. Each OTDM switch S1-S4 has to be capable of switching with a switching rate equal to the pulse repetition rate of the received laser carrier SI. The switched optical signals of the second to the forth branch travel through the different optical delay lines D2- D4, which introduce an equidistant time delay of a fraction of the pulse time distance depending on the number of optical branches (e.g. one quarter if split in for branches as shown) between each pair of subsequent branches CH1- CH4. Said signals are then recombined at the optical coupler OC. The output signal SO shows an optical bit rate that equals to a multiple of the pulse rate of the laser carrier SI. In the specific case of Fig. 1, a 40 Gbit/s output signal is generated. According to specific construction of the classical OTDM transmitter OTC, further components like an amplifier OA, e.g. realised as erbium doped fiber amplifier (EDFA), may be added.

The maximum bit rate of such OTDM transmitters is limited to data rates for which the pulse width is a small fraction of the bit duration. The reason is a phenomenon known as "coherent cross talk". When recombining the signal portions at the common output port, subsequent pulses tend to interfere with each other. The coherent cross talk occurs due to a lack of correlation between the optical phases of subsequent pulses coming from different branches. Coherent cross talk leads to strong system penalty. As result of system modelling and verified by system trials, for a 1 dB power penalty with for example 13 dB external data modulation the pulse tail extinction ratio should be as high as 29 dB. This shows that the pulse tail extinction is a very important parameter in OTDM transmitters when multiplexing uncorrelated signals. For reliable optical time division multiplexing (OTDM), the optical input data must have return-to-zero pulse format with a very narrow pulse width (e.g. below 30 % of the available time window) to avoid coherent cross talk. This leads to a large optical signal bandwidth, which reduces the spectral efficiency of the system. Neighbouring wavelength in wavelength division multiplex (WDM) systems based on such optical time division multiplexers thus have to be spaced accordingly with great frequency distance.

For fast switching of optical signals, so-called electroabsorption modulators (EAM's) have attracted a lot of attention in the field of optical transmission. Usually electroabsorption modulators are used for optical data modulation, optical pulse generation or optical gates for demultiplexing. They typically display an approximately logarithmic attenuation variation with the applied voltage and allow a low duty cycle. That allows the generation of high quality optical pulses. Fig.2a schematically shows an electroabsorption modulator EAM with an optical input signal S10, an optical output signal S11 and an electrical control signal CS.

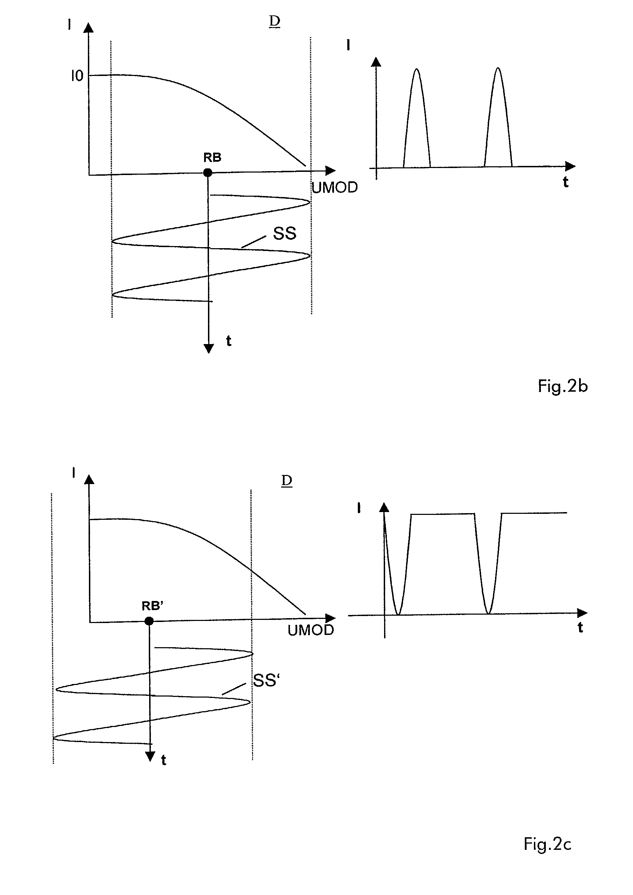

Fig.2b illustrates the electro-optical characteristics of the electroabsorption modulator EAM shown in Fig.2a controlled according to the use in prior art demultiplexers. As control signals CS, a sinusoidal control signal SS around a certain reverse bias voltage RB is applied. A diagram D in principle shows the intensity I of the output signal S11 of said electroabsorption modulator EAM fed by an input signals S10 of an intensity 10. The intensity I of the output signal S11 is logarithmically plotted over a voltage UMOD of the applied control signal CS. The diagram D shows nearly no change of the intensity I for forward voltages or small reverse voltages of the modulation signal UMOD, i.e. showing the input intensity 10 in ideal case, and a strong decrease in intensity (logarithmic presentation) for an increasing reverse voltage UMOD. The sinusoidal control signal SS is plotted over the time t below said diagram D. At the right side of the figure, the intensity I of the output signal S11 of the electroabsorption modulator EAM, fed with a constant input signal S10 and controlled by said sinusoidal control signal SS is plotted over the time t.

In the whole voltage range of said sinusoidal signal SS, the curve indicates roughly logarithmic behaviour, showing a high value for the intensity I of the output signal S11, i.e. a high transmission value of the electroabsorption modulator EAM, near zero volt (intersection of the ordinate with the abscissa) and descending with rising voltage UMOD. As result, the intensity I of said output signal plotted over the time, due to the logarithmic attenuation behaviour of the electroabsorption modulator EAM in the here considered voltage range, shows short optical pulses with a low duty cycle, i.e. the pulse width is only a small fraction of the repetion period of the electrical driving signal. Thus, short switching windows are realised, that are far smaller than the pulse repetition period.

According to the invention, cascaded electroabsorption modulators are used in an optical transmitter. As long as the electroabsorption modulators are controlled in the above described method, cascading such modulators is not possible, as these modulators are not optically transparent outside their switching window, i.e. when the transmission value is low.

Referring to Fig.2c, a modified method to control electroabsorption modulators EAM according to the invention is illustrated in principle. A modified control signal SS' applied to the electroabsorption modulator EAM of Fig. 2a shows the same sinusoidal form, but a modified bias voltage RB' nearer to zero volt compared to the bias voltage RB of the control signal SS described in Fig.2b. Within the voltage range of said modified control signal SS', the electroabsorption modulator EAM shows only partly logarithmic attenuation behaviour (right part). Partly (left part), the attenuation goes over into a constant with high transmission. In wide periodic time periods, the electroabsorption modulator EAM now remains optically transparent (high transmission value TR), interrupted by short "negative" pulses. In a right part diagram, in and idealised presentation, the intensity I of the modulator output signal is plotted over the time t. The intensity of said output signal can be interpreted as being of time constant value, suppressed by short suppression pulses. The time windows of said suppression pulses are significantly shorter than the pulse repetition time, in the example shown in Fig.2c less than one half said repetition time. Cascading two or more electroabsorption modulators EAM's modulating one laser signal subsequently in different non-overlapping time windows or modulation slots becomes possible with this method.

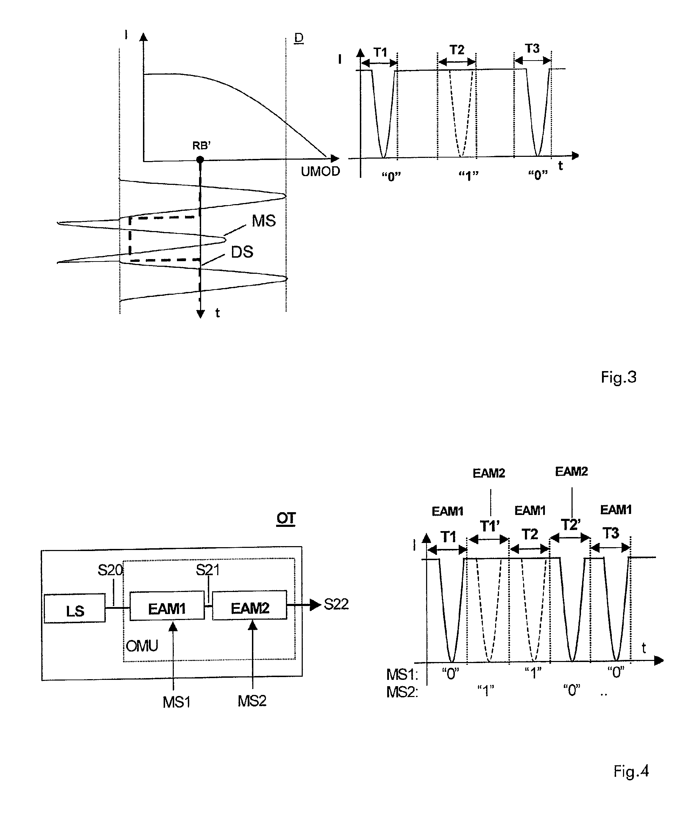

Fig.3 illustrates an example for a generation of a control signal for controlling an electroabsorption modulators EAM to be used in an optical modulation unit OMU according to the invention. Fig.3 differs from Fig. 2c in that a further modified control signal MS, further named modulation signal MS, is applied to the electroabsorption modulator EAM. This modulation signal MS is realised as superposition of the modified sinusoidal control signal SS' shown in Fig.2c and a data signal DS, presented as dotted line, showing a bit rate corresponding to the modulation frequency of the electroabsorption modulators EAM. The modulation frequency is similar to the frequency of said modified sinusoidal control signal SS'. The data signal DS is an (electrical) NRZ signal with one voltage level representing a "0" and another voltage level representing a "1". Here, as example, a modulation signal MS representing a data sequence "0", "1", "0" is shown. A right part diagram shows the intensity I of a corresponding modulator output signal plotted over the time t again in an idealised presentation. The output signal now shows (idealised) constant intensity with short intensity suppressions (negative pulses) in a first time window T1 and in a third time window T3 representing the "0" values. In the second time window T2, no suppression takes place due to the corresponding "1" value of the data signal DS.

By superposition of an electrical sinusoidal signal SS' and a data signal DS, an RZ like signal is generated, that allows for suppression of the input signal S10 in small time windows or time slots T1, T2 and T3 according to the data signal DS. Outside or between said time slots the transmission of the electroabsorption modulator EAM is high, i.e. the electroabsorption modulator EAM remains optically transparent.

Alternatively to said superposition, a corresponding electrical RZ signal can be generated directly by an appropriate RZ signal generator. However, the generation of electrical RZ data is strongly limited by bandwidth of the electronic circuits. The above described method allows for very high bit rates to be used in future systems (e.g. with bit rates of 40 Gbit/s and above).

Referring to Fig.4, on the left side an optical (time division multiplex) transmitter OT according to the invention comprising a laser source LS, a first (electroabsorption) modulator EAM1 and a second (electroabsorption) modulator EAM2, controlled by a first modulation signal MS1 and a second modulation signal MS2 respectively, is shown. The laser signal S20 of the laser source LS is fed to the optical input of the first modulator EAM1 and the output signal S21 of said first modulator EAM1 is fed to the second modulator EAM2. The output of this modulator EAM21 represents the output of the optical transmitter OT. The two modulators EAM1 and EAM2 cascaded in such a manner form an optical modulation unit OMU.

At the right side of Fig.4, the intensity I of the output signal S22 of the optical modulation unit OMU, fed by a continuous wave laser signal S20 is plotted over the time t. The time axis t is divided into subsequent modulation slots T1, T1', T2, T2', T3 each of the same length, in which the first modulator EAM1 and the second modulator EAM2 alternately switch the laser signal S20 according to the modulation signals MS1 and MS2 respectively. In the example shown here, the first modulation signal MS1 is similar to the modulation signal MS of Fig.3, representing a bit sequence "0", "1", "0". The second modulation signal MS2 represents a bit sequence "1", "0". The output signal S22 of the optical transmitter OT thus shows light suppressions in the modulation slots T1, T2' and T3. Outside these slots, the output signals remains of constant intensity (idealised presentation). Said output signal thus represents the sequence "0", "1", "1", "0", "0".

Alternatively, instead of a continuous wave signal S20, a pulsed laser signal is emitted by the laser source LS or the continuous wave signal of a corresponding laser is modulated to emit a pulse train. The pulse repetition rate corresponds to the bit rate of the output signal (S22). The modulators EAM1 and EAM2 then pass or block single pulses each according to the corresponding first modulation signal MS1 or the second modulation signal MS2.

By cascading two or more modulators EAM1 and EAM2 optical data can be generated by this modulation scheme with a data rate multiplied by the number of cascaded modulastors, i.e. far beyond the data rate of one modulator. For the example shown here, twice the data rate is achieved (e.g. 80 Gbit/s for combined 40 Gbit/s modulation of each of two cascaded modulators).

The output signal doesn't show the interference effects described under Fig.1, even if the pulse width of the output pulses are close to the pulse bit period time of the output signal.

For physical realisation, the cascaded electroabsorbtion modulators EAM1 and EAM2 can be integrated in a cost-effective way as a single chip in a module with two driving electrodes.

Alternatively, instead of electroabsorbtion modulators, other modulators, e.g. Mach-Zehnder modulators controlled by appropriate modulation signals can be used.

## Claims

1. An optical transmitter (OT) for generation of an optical data signal (SO) out of at least two input modulation signals (MS1, MS2), comprising
• a laser source (LS) for generation of a laser signal (S20),
• at least two optical modulators (EAM1, EAM2) for modulation of said laser signal (S20) according to said modulation signals (MS1, MS2),
**characterised in, that**
• said modulators (EAM1, EAM2) are optically connected in series to said laser source (LS) and that
• the optical transmitter (OT) comprises a control mean to control said modulators (EAM1, EAM2) such, that the passing laser signal (S20) is modulated subsequently in cyclic order within defined non-overlapping time windows (T1, T1', T2, T2', T3).

2. An optical transmitter (OT) according to claim 1, **characterized in, that** the laser source (LS) has means for emitting a pulsed laser signal (S20) with a pulse repetition rate corresponding to the bit rate of the output signal (S22) and that to modulate the laser signal (S20) said modulators (EAM1, EAM2) have means to pass or block single pulses.

3. An optical transmitter (OT) according to claim 1, **characterized in, that** the time windows spacing (T1, T1', T2, T2', T3) corresponds to the bit rate of the output signal (SO), and that to modulate the laser signal (S20) each modulator (EAM1, EAM2) have means to pass or block the laser signal (S20) within the time windows assigned to the corresponding modulator (EAM1, EAM2) for a time period of equal or shorter duration that the duration of one time window.

4. An optical transmitter (OT) according to claim 1, **characterized in, that** the modulators (EAM1, EAM2) are electroabsorption modulators.

5. An optical transmitter (OT) according to claim 4, **characterized in, that** electrical return-to-zero generators are comprised for the generation of the modulation signals (MS1, MS2) to control said modulators (EAM1, EAM2) .

6. An optical transmitter (OT) according to claim 4, **characterized in, that** signal generation means are comprised for the generation the modulation signals (MS1, MS2) to control said modulators (EAM1, EAM2) by a superposition of a sinusoidal signal and a non-return-to-zero data signal.

7. An optical modulation unit (OMU) for modulation of an optical data signal (SO) out of at least two input modulation signals (MS1, MS2), comprising
• An optical input for irradiating a light signal (S20),
• at least two optical modulators (EAM1, EAM2) for modulation of said light signal (S20) according to said modulation signals (MS1, MS2),
**characterised in, that**
• said modulators (EAM1, EAM2) are optically connected one behind the other and that
• the optical modulation unit (OMU) comprises a control mean to control said modulators (EAM1, EAM2) such, that the passing laser signal (S20) is modulated subsequently in cyclic order within defined non-overlapping time windows (T1, T1', T2, T2', T3).

8. An electroabsorption modulator (EAM1) for modulating a laser signal (S20) according to a data signal (DS), **characterized in, that** generator means are comprised to generate an electrical control signal (MS) such, that the electroabsorption modulator (EAM1) blocks the laser signal (S20) for short time periods (T1, T2, T3) significantly shorter than the bit period of the optical output signal (S21) and remains optically transparent in between.

9. An electroabsorption modulator (EAM1) according to claim 8, **characterized in, that** the generator means comprises a generator of a sinusoidal signal (SS') with a bias voltage (PB') near zero Volt and adding means for adding a non-return-to-zero pulse shaped data signal (DS) to said sinusoidal signal (SS').

10. A method to generate an optical data signal (SO) out of at least two input modulation signals (MS1, MS2), wherein
• a laser source (LS) generates a laser signal (S20) to be modulated corresponding to said modulation signals (MS1, MS2),
• said laser signal (LS) is modulated according to said modulation signals (MS1, MS2) by at least two optical modulators (EAM1, EAM2),
**characterised in, that**
• said modulators (EAM1, EAM2) are optically connected one behind the other to said laser source (LS) and that
• said modulators (EAM1, EAM2) modulate the passing laser signal (S20) subsequently in cyclic order within defined non-overlapping time windows (T1, T1', T2, T2', T3).
